# EUROPÄISCHE PATENTSCHRIFT

(11) **EP 3 374 234 B1**
(45) Veröffentlichungstag und Bekanntmachung des Hinweises auf die Patenterteilung: **23.02.2022**
(21) Anmeldenummer: 16798623.1
(22) Anmeldetag: 03.11.2016
(51) Int. Cl.: B60R 16/02, F16L 3/24

(54) **BEFESTIGUNGSSYSTEM**
SECURING SYSTEM
SYSTÈME DE FIXATION

(30) Priorität: 10.11.2015 DE 102015014430
(43) Veröffentlichungstag der Anmeldung: 19.09.2018
(73) Patentinhaber: A. Raymond et Cie. SCS, 38000 Grenoble (FR)
(72) Erfinder: RHEIN, Axel, 79585 Steinen (DE)
(74) Vertreter: Tilmann, Max Wilhelm
(86) Internationale Anmeldenummer: PCT/EP2016/001821
(87) Internationale Veröffentlichungsnummer: WO 2017/080635

(56) Entgegenhaltungen:
- WO-A1-2009/082325
- DE-A1-102004 026 224
- DE-A1-102007 060 030
- DE-U1-202008 005 734
- US-A1- 2009 272 576

## Beschreibung

Die Erfindung betrifft ein Befestigungssystem zum Befestigen eines Kabelstrangs an einem Rahmen eines Fahrzeugs.

In Fahrzeugen ist es notwendig, Leitungen zu verlegen, die teilweise entlang des Rahmens des Fahrzeugs geführt werden. Die Leitungen können beispielsweise zwischen der Antriebseinheit und der Fahrgastzelle eine Verbindung herstellen. Bei den Leitungen kann es sich insbesondere um leitende Kabel zur Übertragung eines elektrischen Signals beziehungsweise einer elektrischen Spannung handeln, um beispielsweise elektrische Verbraucher mit Strom beziehungsweise Spannung zu beaufschlagen, wobei als Spannungsquelle die in dem Fahrzeug angeordnete Batterie verwendet werden kann. Bei den Leitungen kann es sich aber auch um Fluide führende Leitungen handeln. Beispielsweise kann in den Leitungen in Form von Rohrleitungen Wasser oder eine sonstige Flüssigkeit geführt werden, wobei das Fluid beziehungsweise die Flüssigkeit mit Druck beaufschlagt sein kann. Es kann sein, dass Leitungen gebogen werden müssen, um diese an die unterschiedlichen Geometrien eines Rahmens anzupassen, was beispielsweise im Falle von Kupferleitungen teuer ist.

Aus DE 195 10 932 B4 ist ein Halter zum Befestigen von länglichen Bauelementen, insbesondere in Form von Rohrleitungen und/oder Kabeln an einer Fahrzeugkarosserie oder einem Fahrzeugchassis bekannt, bei dem zwei schwenkbar miteinander verbundene Teile vorgesehen sind, zwischen denen ein Schraubgewindemittel wirkt, um zwei gegenüberliegende Klemmabschnitte der Teile auf einen zwischen ihnen gelegenen Abschnitt der Karosserie oder des Chassis zu klemmen oder hiervon zu lösen. Der Zugriff zur Befestigung des Halters wird durch eine Vorkonfektion des Halters mit einem entsprechenden Kabel oder Leitungen erschwert. Zudem ist für die Montage des Halters eine vorbestimmte Ausgestaltung des Rahmens und/oder Chassis erforderlich, damit ein an einem Teil des Halters vorgesehener Arm einen Abschnitt des Rahmens beziehungsweise des Chassis hintergreifen kann. Der aus DE 195 10 932 B4 bekannte Halter bietet genau eine Möglichkeit für eine Form und Länge eines Rahmens beziehungsweise Chassis und ist nicht flexibel einsetzbar ist.

Aufgabe der Erfindung ist es, zumindest einen der genannten Nachteile zu verbessern, insbesondere ein Befestigungssystem zu schaffen, das an unterschiedliche Anforderungen und/oder beim Einbau ergebende Abweichungen, die auch aufgrund von Toleranzen bei der Fertigung des Rahmens oder Chassis vorhanden sind, in gewissem Maße anpassbar ist, wobei insbesondere Leitungen gerade verlegt werden können.

Die Aufgabe wird gemäß dem Gegenstand der nebengeordneten Patentansprüche gelöst. Vorteilhafte Ausführungsformen sind in den unter Ansprüchen beansprucht und ergeben sich aus der nachfolgenden Beschreibung der Erfindung.

Kern der Erfindung ist es, ein mehrere Teile aufweisendes System zu schaffen, bei dem unterschiedlich ausgestaltete Teile des Systems verwendet werden können, um unterschiedliche Anforderungen zu berücksichtigen. Das Befestigungssystem kann modular aus Teilen aufgebaut werden, wobei für ein bestimmtes Teil mehrere Varianten vorhanden sein können. Mit den unterschiedlichen Ausgestaltungen eines Teils können Anforderungen und/oder Toleranzen berücksichtigt werden. Es kann eine Trennung einer Funktionalität der einzelnen Teile des Befestigungssystems erreicht werden, bei der ein erstes Teil (Basisteil), der an einem Rahmen befestigt werden kann, einen Befestigungsbereich für einen weiteren Teil (Kabelträgerstrang) des Befestigungssystems bestimmt. Das erste Teil kann an den Rahmen angepasst sein und innerhalb der Befestigung am Rahmen einen Ausgleich ermöglichen. Das zweite Teil kann an den Kabelträger angepasst sein und kann bei einer Befestigung am ersten Teil einen Ausgleich dadurch schaffen, dass die relative Positionierung der beiden Teile zueinander in gewissen Bereichen veränderbar ist, wobei die Befestigung der Teile miteinander eine Variabilität erlauben und/oder eine Verwendung von Teilen, die eine unterschiedliche Dimensionierung zueinander aufweisen, vorgesehen sein kann.

Die Erfindung schafft ein Befestigungssystem zum Befestigen eines Kabelstrangs an einem Rahmen eines Fahrzeugs. Das Befestigungssystem weist ein Basisteil und zumindest einen ersten Kabelstrangträger und einen zweiten Kabelstrangträger auf. Das Basisteil kann mit dem Rahmen fest verbunden werden. Der erste und der zweite Kabelstrangträger können wahlweise an dem Basisteil befestigt werden. Die beiden Kabelstrangträger weisen jeweils eine Öffnung auf, durch die der Kabelstrang geführt werden kann. Die beiden Kabelstrangträger weisen jeweils ein Verbindungselement und ein Auflageelement auf, wobei der Abstand zwischen dem Auflageelement und der Öffnung zwischen dem ersten Kabelstrangträger und dem zweiten Kabelstrangträger unterschiedlich ist. Je nach benötigtem Abstand kann somit ein gewünschter Kabelstrangträger gewählt werden, der dem geeigneten Abstand zwischen dem Verbindungselement und der Öffnung entspricht. Beispielsweise können (Fertigungs-)Toleranzen mittels eines größeren oder kleineren gewählten Abstands ausgeglichen werden. Insbesondere kann hierdurch eine Abweichung oder Toleranz in einer Richtung quer zur Längsrichtung des Kabelstrangs beziehungsweise der Längserstreckung der Öffnung eines Kabelstrangträgers ausgeglichen werden.

Die Erfindung schafft auch ein Befestigungssystem zum Befestigen eines Kabelstrangs an einem Rahmen eines Fahrzeugs, wobei das Befestigungssystem ein Basisteil und zumindest einen ersten Kabelstrangträger umfasst. Das Basisteil kann mit dem Rahmen fest verbunden werden und der erste Kabelstrangträger kann an dem Basisteil befestigt werden. Das Basisteil weist einen Arm auf, der von einer Aufnahme des Kabelstrangträgers zumindest teilweise in Richtung quer zur Längserstreckung des Arms umschlossen werden kann. Die Aufnahme ist in Richtung quer zur Längserstreckung des Arms größer als die Erstreckung des Arms in Richtung quer zu seiner Längsrichtung. Der erste Kabelstrangträger wird mit seiner Aufnahme auf den Arm des Basisteils aufgeschoben bzw. aufgesteckt. Die Längserstreckung des Arms entspricht dabei der Aufschub- oder Steckrichtung des Kabelstrangträgers auf den Arm des Basisteils. Es kann eine Steck-Verbindung zwischen der Aufnahme des Kabelstrangträgers und des Arms des Basisteils gebildet werden, die in einer Richtung quer zur Aufschub- beziehungsweise Steckrichtung ein Verschieben des Kabelstrangträgers relativ zum Arm des Basisteils ermöglicht. Hierdurch können sich ergebende Toleranzen ausgeglichen werden. Insbesondere kann hierdurch eine Toleranz in Längsrichtung des Kabelstrangträgers beziehungsweise in Längsrichtung der Öffnung des Kabelstrangträgers ausgeglichen werden. Der Kabelstrangträger kann insbesondere in Längsrichtung des Kabelstrangs in seiner Befestigung am Arm verschoben werden.

Es ist auch möglich, dass ein Befestigungssystem geschaffen wird, bei dem zwei Kabelstrangträger, die wahlweise an dem Basisteil befestigt werden können, vorgesehen sind, wobei die beiden Kabelstrangträger einen oben beschriebenen unterschiedlichen Abstand zwischen dem Auflageelement und der Öffnung aufweisen, wobei zusätzlich zumindest einer der beiden Kabelstrangträger eine Aufnahme aufweist, die die oben beschriebene Spezifikation bezüglich der Größe in Relation zum Arm des Basisteils aufweist. Die beiden vorgenannten Gegenstände sind miteinander frei kombinierbar. Die Erfindung schafft somit auch ein Befestigungssystem zum Befestigen eines Kabelstrangs an einem Rahmen eines Fahrzeugs, das ein Basisteil und zumindest einen ersten Kabelstrangträger und einen zweiten Kabelstrangträger aufweist. Das Basisteil kann mit dem Rahmen fest verbunden werden. Der erste und der zweite Kabelstrangträger können wahlweise an dem Basisteil befestigt werden. Die beiden Kabelstrangträger weisen jeweils eine Öffnung auf, durch die der Kabelstrang geführt werden kann. Die beiden Kabelstrangträger weisen jeweils ein Verbindungselement und ein Auflageelement auf, wobei der Abstand zwischen den Auflageelementen und der Öffnung zwischen dem ersten Kabelstrangträger und dem zweiten Kabelstrangträger unterschiedlich ist. Das Basisteil weist zudem einen Arm auf, der von einer Aufnahme des Kabelstrangträgers zumindest teilweise in Richtung quer zur Längserstreckung des Arms umschlossen werden kann. Die Aufnahme ist in Richtung quer zur Längserstreckung des Arms größer als die Erstreckung des Arms in Richtung quer zu seiner Längsrichtung.

Der Begriff "Rahmen" im Sinne der Erfindung umfasst das tragende Grundgerüst von einem Fahrzeug, auf das weitere Teile montierbar sind.

Der Begriff "Fahrzeug" im Sinne der Erfindung umfasst ein mobiles Verkehrsmittel, das nur oder überwiegend an Land, nur oder überwiegend in oder auf dem Wasser und/oder nur oder überwiegend in der Luft bewegt werden kann. Ein Fahrzeug im Sinne der Erfindung ist insbesondere ein nicht spurgebundenes Landfahrzeug, insbesondere ein Kraftfahrzeug, vorzugsweise ein Lastkraftwagen mit starrem Rahmen, der im Wesentlichen zur Beförderung von Gütern oder anderen Lasten vorgesehen ist.

Der Begriff "Basisteil" im Sinne der Erfindung umfasst ein Teil des Systems, welches die Verbindung zwischen dem Rahmen und dem Befestigungssystem ermöglicht. An dem Basisteil können die weiteren Teile des Befestigungssystems befestigt werden. Vorzugsweise weist das Basisteil ein Metall auf bzw. besteht aus einem Metall. Das Basisteil kann bevorzugt aus einem Kunststoff bestehen oder einen solchen aufweisen.

Der Begriff "Kabelstrang" im Sinne der Erfindung umfasst ein oder mehrere ummantelte elektrische Leitungen, die ihrerseits in einem Bündel vorliegen können, und/oder ein oder mehrere Rohrleitungen, die zum Transport von Fluiden verwendet werden können, wobei auch die Rohrleitungen in einem Bündel vorliegen können.

Der Begriff "Kabelstrangträger" im Sinne der Erfindung umfasst ein den Kabelstrang zumindest teilweise unterstützendes Element des Befestigungssystems, welches in Kontakt bzw. Anlage mit dem Kabelstrang gelangt. Vorzugsweise ist der Kabelstrangträger derart am Basisteil befestigbar, dass der Kabelstrang entlang des Rahmens geführt werden kann. Der Kabelstrang kann beispielsweise auf dem Kabelstrangträger aufliegen. Der Kabelstrang kann schon mit den Kabelstrangträgern vorkonfektioniert werden. Der Kabelstrangträger kann einen Kunststoff umfassen oder aus einem Kunststoff bestehen, wobei es auch bevorzugt sein kann, dass der Kabelstrangträger aus einem Kunststoff besteht oder einen solchen aufweist.

Der Begriff "Öffnung" im Sinne der Erfindung umfasst eine Aufnahme für den Kabelstrang, die an die Außenkontur des Kabelstrangs oder eines Teils des Kabelstrangs angepasst ist. Die Öffnung kann den Kabelstrang zumindest teilweise umschließen, wobei auch vorgesehen sein kann, dass die Öffnung den Kabelstrang in einem Winkelbereich von größer als 180°, insbesondere größer als 200°, bevorzugt größer als 250°, und besonders bevorzugt größer als 300° umschließt. Die Öffnung weist eine Längserstreckung oder eine Normalenrichtung bezogen auf den Querschnitt der Öffnung auf, die mit der Längserstreckung des für die Öffnung vorgesehenen Kabelstrangs bzw. des in der Öffnung befindlichen Kabelstrangs in dem Bereich der Öffnung zusammenfällt. Ein Kabelstrangträger weist eine oder mehrere Öffnungen für einen Kabelstrang auf. Beispielsweise kann ein Kabelstrangträger 3, 4, 5, 6, 7 oder mehr Öffnungen für einen Kabelstrang aufweisen.

Der Begriff "Auflageelement" im Sinne der Erfindung umfasst ein Element, mit dem der Kabelstrangträger in Anlage mit dem Rahmen oder einem rahmenseitigen Rahmeneinsatz gelangen kann. Das Auflageelement kann flächig ausgestaltet sein, wobei auch mehrere unzusammenhängende Flächen vorgesehen sein können. Es ist auch eine Auflage mittels einer oder mehrerer "punktförmiger" Auflagestellen möglich, wobei die Möglichkeit des Festsetzens von Schmutz mit einer eventuellen Beschädigung einer Lackierung bei einer oder mehreren punktförmigen Auflagestellen verringert ist. Eine "punktförmige Auflagestelle" im Sinne der Erfindung umfasst eine Auflagefläche kleiner gleich ungefähr 1 cm², bevorzugt kleiner gleich ungefähr 0,75 cm², weiter bevorzugt kleiner gleich ungefähr 0,5 cm², insbesondere bevorzugt kleiner gleich ungefähr 0,4 cm², und ganz besonders bevorzugt kleiner gleich ungefähr 0,3 cm².

Der Begriff "Aufnahme" im Sinne der Erfindung umfasst eine Öffnung, die den Arm des Kabelstrangträgers umgeben kann, wobei die Öffnung eine Innenkontur aufweist, die größer ist als die Außenkontur des Arms. Die Aufnahme kann den Arm zumindest in einem Abschnitt des Arms vollumfänglich umgeben, wobei bevorzugt ist, dass die Aufnahme den Arm nicht vollumfänglich umgibt, wodurch beispielsweise Material eingespart werden kann. Die Aufnahme kann als eine oder mehrere den Arm über umfänglich mindestens drei aufeinanderfolgende Seiten umgreifende Klammer ausgestaltet sein, wobei der Abstand der Schenkel der Klammer bzw. der Klammern zueinander größer ist als die Erstreckung des Arms in dieser Richtung. Der Querschnitt der Aufnahme kann in der Richtung einen größeren Abstand aufweisen als die Erstreckung des Arms in der Richtung quer zum Aufschieben der Aufnahme auf den Arm. Die Aufnahme kann Teil eines Verbindungselements sein oder ein Verbindungselement bilden.

In einer bevorzugten Ausführungsform weist das Basisteil einen ersten und einen zweiten Arm auf, wobei der zweite Arm unter einem Winkel mit dem ersten Arm verbunden ist. Erster und zweiter Arm des Basisteils schließen einen Winkel miteinander ein, so dass mit dem Basisteil des Befestigungssystems eine Ebene aufgespannt werden kann und/oder sich die beiden Arme in unterschiedlichen Richtungen erstrecken können.

In einer bevorzugten Ausführungsform weist der erste Arm ein Befestigungselement zum Befestigen des Basisteils an dem Rahmen auf. Das Basisteil kann damit am ersten Arm ein Befestigungselement aufweisen, welches die Befestigung an dem Rahmen ermöglicht. Das Basisteil kann beispielsweise separat von den anderen Teilen des Systems an dem Rahmen befestigt werden. Mit am Rahmen befestigten Basisteilen kann eine Möglichkeit geschaffen werden, Befestigungsbereiche für die Kabelstrangträger zu bilden. Der Kabelstrang kann mit Kabelstrangträgern vorkonfektioniert werden, so dass die Kabelstrangträger zusammen mit dem Kabelstrang an den entsprechenden Basisteilen befestigt werden können.

In einer bevorzugten Ausführungsform ist das Befestigungselement ein Langloch, welches eine gewisse Toleranz in Richtung der Erstreckung des Langlochs ermöglicht. Das Befestigungselement kann innerhalb der von dem Langloch vorgegebenen Erstreckung am Rahmen verschoben werden. Insbesondere kann eine Schraube durch das Befestigungselement, welches als Langloch ausgebildet ist, gesteckt werden und an einem Loch des Rahmens ebenfalls durchgesteckt werden. Obwohl an der Möglichkeit einer Befestigung des Basisteils unter Ausnutzung der an dem Rahmen ausgestalteten Löcher festgehalten wird, kann ein Toleranzausgleich durchgeführt werden. Die Erfindung kann damit die an fest vorgegebenen Stellen des Rahmens vorgesehenen Löcher nutzen und aufgrund des modularen Aufbaus dennoch eine flexible Befestigung unter Ausgleich eventueller Toleranzen ausgleichen.

In einer bevorzugten Ausführungsform ist an dem Ende des zweiten Arms ein Clipelement vorgesehen, das in Bezug auf die laterale Erstreckung des zweiten Arms rückwärtig gebogen ist, wobei das Clipelement einen Berührungspunkt aufweist, der in Richtung des zweiten Arms vorgespannt ist. Neben dem Befestigungselement kann damit ein weiteres Element, nämlich das Clipelement, vorgesehen sein, das den zweiten Arm und damit auch das Basisteil fixieren kann. Der Einfluss von Schwingungen auf die Befestigung kann verringert werden.

In einer bevorzugten Ausführungsform ist das Verbindungselement, das an jedem der beiden Kabelstrangträger vorgesehen ist, ein erster Teil einer Schnappverbindung, wobei der zweite Teil der Schnappverbindung an dem Basisteil vorgesehen ist. Der Kabelstrangträger kann somit auf das Basisteil in Form einer Schnappverbindung gesteckt bzw. aufgeschoben und fixiert werden.

In einer bevorzugten Ausführungsform weist das Basisteil wenigstens ein oder mehrere zweites Teil bzw. zweite Teile der Schnappverbindung auf, welches bzw. welche erlaubt bzw. erlauben den gewählten Kabelstrangträger an verschiedenen Positionen mit dem Basisteil zu verbinden. Die Schnappverbindung kann sicherstellen, dass eine dauerhafte Verbindung zwischen dem Basisteil und dem Kabelstrangträger auch bei eventuellen Erschütterungen und Vibrationen gegeben sein kann. Das zweite Teil bzw. die zweiten Teile kann bzw. können als federvorgespannte Kontaktzungen ausgestaltet sein, die mit oder in entsprechend ausgestaltete Anlageflächen oder Verrastungsausnehmungen des gewählten ersten oder zweiten Kabelstrangträgers drücken. Insbesondere kann eine Kontaktzunge in Richtung vom zweiten Arm des Basisteils weg federvorgespannt sein. Es kann vorgesehen sein, dass von außen auf die Kontaktzunge zugegriffen werden kann, um beispielsweise die Verrastung zu lösen.

Ferner kann vorgesehen sein, dass am (zweiten) Arm des Basisteils ein oder mehrere Federelemente vorgesehen sind, die den auf das Basisteil aufgeschobenen Kabelstrangträger in eine vorbestimmte Richtung quer zum Aufschieben des Kabelstrangträgers auf das Basisteil drücken, so dass der Kabelstrangträger in einer Richtung quer zur Erstreckung des (zweiten) Arms des Basisteils und in einer Richtung quer zur Längserstreckung der Öffnung im Kabelstrangträger ausgebildeten Öffnung erstreckenden Richtung eine definierte Lage aufweist. Die Federelemente können damit eine Kraft auf den Kabelstrangträger ausüben, die sowohl quer zur Längserstreckung des zweiten Arms des Basisteils als auch quer zur Längserstreckung der Öffnung des Kabelstrangträgers ist.

Ferner können eine oder mehrere Positionierungselemente vorgesehen sein, die eine vorbestimmte Lage in Richtung des Aufschiebens des Kabelstrangträgers auf den (zweiten) Arm des Basisteils definieren. Dabei kann insbesondere vorgesehen sein, dass ein oder mehrere Positionierungselemente in oder an eine Anlagefläche des Kabelstrangträgers an einer vorbestimmten Position des Aufschiebens des Kabelstrangträgers auf den (zweiten) Arm gelangen. Die Geometrie des (zweiten) Arms und des Kabelstrangträgers können derart aneinander angepasst sein, dass der Abstand zwischen einem Anschlag, den der zweite Arm des Basisteils für den Kabelstrangträger bildet, und einer Eingriffsstelle der einen oder der mehreren Positionierungselemente dem Abstand zwischen der Anschlagfläche des Kabelstrangträgers und der Verrastungsausnehmung für die eine oder die mehreren Kontaktzungen entspricht.

In einer bevorzugten Ausführungsform weist jeder Kabelstrangträger einen schlittenartigen Teil auf, wobei die Dicke des schlittenartigen unteren Teils in der Richtung senkrecht zur Längserstreckung des schlittenartigen unteren Teils des ersten Kabelstrangträgers größer ist als die Dicke des schlittenartigen unteren Teils in der Richtung senkrecht zur Längserstreckung des schlittenartigen unteren Teils des zweiten Kabelstrangträgers. Hierdurch können die Differenzen oder Toleranzen in der Richtung senkrecht zur Längserstreckung des schlittenartigen unteren Teils der Kabelstrangträger ausgeglichen werden, wobei zudem durch die schlittenartige Ausgestaltung eine einfache Montage ermöglicht werden kann.

In einer bevorzugten Ausführungsform weist wenigstens einer der Kabelstrangträger ein oberes Teil auf, das mit den weiteren Kabelstrangträgern mittels einer Gelenkverbindung verbunden ist und die Öffnung, durch die der Kabelstrang geführt werden kann, ist teilweise durch Teile des oberen Teils und teilweise durch Teile eines weiteren Teils des Kabelstrangträgers begrenzt. Der Kabelstrangträger kann mehrteilig aufgebaut sein. Es kann vorgesehen sein, dass die Öffnung, in der der Kabelstrang geführt ist, mittels eines Deckels oder Deckelteils verschlossen werden kann, um den im Kabelstrangträger geführten Kabelstrang zu schützen und/oder eine sichere Aufnahme des Kabelstrangs im Kabelstrangträger möglichst sicherzustellen. Der Begriff "Gelenk" im Sinne der Erfindung umfasst Filmscharniere und flexible Verbindungen, beispielsweise in Form eines langgestreckten Elements, welches ermöglicht, zwei Teile gegeneinander zu verschwenken.

Die Erfindung schafft auch einen Rahmen eines Fahrzeugs mit einem daran befestigten Kabelstrang, wobei das Basisteil des Befestigungssystems entsprechend den oben genannten Ausführungen an dem Rahmen befestigt ist, einer der Kabelstrangträger des Befestigungssystems entsprechend den oben genannten Ausführungen an dem Basisteil befestigt ist und der Kabelstrang durch die Öffnung des Kabelstrangträgers geführt ist.

In einer bevorzugten Ausführungsform ist die Mittellinie des Kabelstrangs bei einem erfindungsgemäßen Rahmen gerade oder zumindest im Wesentlichen gerade, wodurch entsprechende Anpassungen entsprechend einfach durchgeführt werden können.

Die Erfindung schafft auch ein Verfahren zum Befestigen eines Kabelstrangs an einem Rahmen eines Fahrzeugs, wobei ein Kabelstrangträger eines oben beschriebenen Befestigungssystems an einem Basisteil eines oben beschriebenen Befestigungssystems befestigt ist, wobei das Basisteil wiederum an dem Rahmen befestigt ist.

Die Erfindung wird nachfolgend anhand eines in den Zeichnungen dargestellten Ausführungsbeispiels näher erläutert.

In den Zeichnungen zeigt:
- Fig. 1a: eine isometrische Darstellung eines Basisteils;
- Fig. 1b: eine isometrische Darstellung eines weiteren Basisteils;
- Fig. 2a: eine Darstellung eines Kabelstrangträger in isometrischer Darstellung;
- Fig. 2b: eine Darstellung des Kabelstrangträgers von Fig. 2a in geschnittener Darstellung von der Seite;
- Fig. 3a: eine Darstellung eines weiteren Kabelstrangträgers in isometrischer Darstellung;
- Fig. 3b: eine Darstellung des Kabelstrangträgers von Fig. 3a in geschnittener Darstellung von der Seite;
- Fig. 4a: eine Darstellung eines weiteren Kabelstrangträgers in isometrischer Darstellung;
- Fig. 4b: eine Darstellung des Kabelstrangträgers von Fig. 4a in geschnittener Darstellung von der Seite;
- Fig. 5a: eine Darstellung eines weiteren Kabelstrangträgers in isometrischer Darstellung;
- Fig. 5b: eine Darstellung des Kabelstrangträgers von Fig. 5a in geschnittener Darstellung von der Seite;
- Fig. 6a: eine Darstellung des am Rahmen befestigten Basisteils von Fig. 1a mit daran befestigtem Kabelstrangträger von Fig.3a/3b in teilweise geschnittener Darstellung von der Seite;

- Fig. 6b: eine Darstellung des am Rahmen befestigten Basisteils von Fig. 1a mit daran befestigtem Kabelstrangträger von Fig. 2a/2b in teilweise geschnittener Darstellung von der Seite;
- Fig. 7: eine Darstellung einer Montage eines Kabelstrangträgers von Fig. 3a/3b auf das am Rahmen befestigte Basisteil von Fig. 1a von der Seite in teilweise geschnittener Darstellung;
- Fig. 8: eine Darstellung eines an dem Basisteil befestigten Kabelstrangträgers von vorne;
- Fig. 9a: eine Darstellung eines an einem Basisteil befestigten Kabelstrangträgers in einer ersten Position von vorne;
- Fig. 9b: eine Darstellung eines an einem Basisteil befestigten Kabelstrangträgers in einer zweiten Position von vorne;
- Fig. 9c: eine Darstellung eines an einem Basisteil befestigten Kabelstrangträgers in einer dritten Position; und
- Fig. 10: eine Darstellung eines Komponenten aufweisenden Kabelstrangträgers in isometrischer Darstellung gemäß Fig. 5.

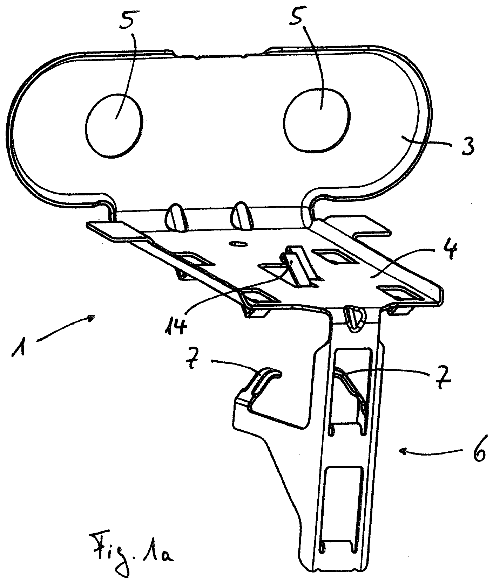

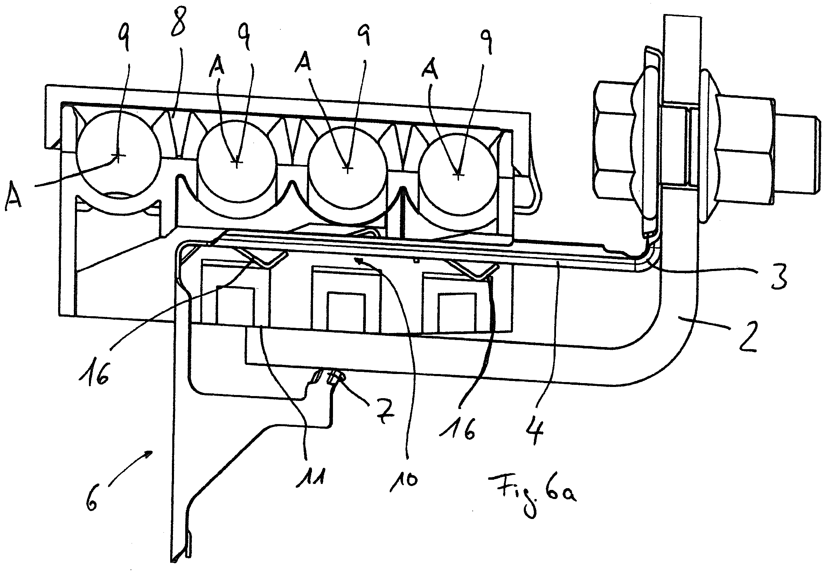

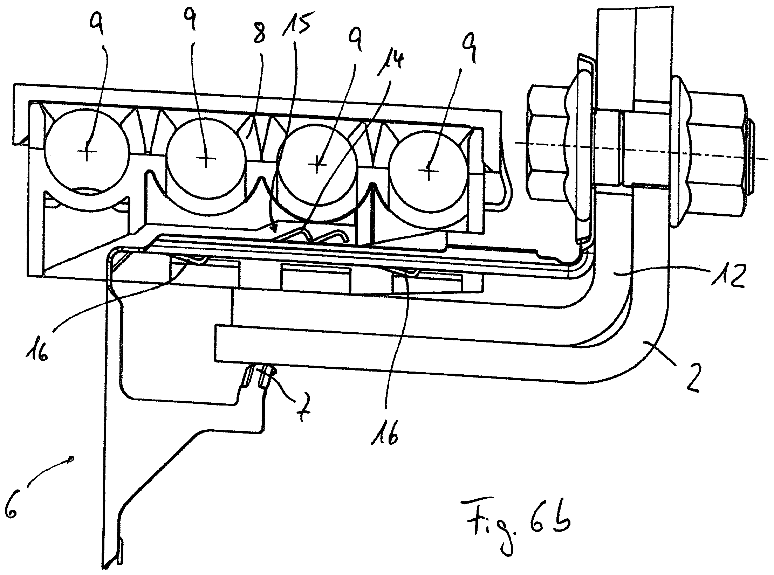

Figur 1a zeigt eine isometrische Ansicht eines Basisteils 1 eines erfindungsgemäßen Befestigungssystems. Das Basisteil 1 kann an einem Rahmen 2 eines Fahrzeugs fest verbunden werden (vgl. Figuren 6a und 6b). Das Basisteil 1 weist einen ersten Arm 3 und einen zweiten Arm 4 auf, die miteinander verbunden sind und einen Winkel miteinander einschließen. Der Winkel, den die Arme 3, 4 miteinander einschließen ist im Wesentlichen 90°, wobei Toleranzen +/- 10° mit umfasst sind. Der erste Arm 3, der mit dem Rahmen 2 des Fahrzeugs in Anlage gebracht und fest mit diesem verbunden werden kann (vgl. Figuren 6a und 6b) weist Befestigungselemente 5 auf, die als durchgehende Löcher im Arm 3 ausgebildet sind, wobei das rechte der beiden in Figur 1a dargestellte Befestigungselement 5 als Langloch ausgebildet ist.

An dem Ende des zweiten Arms 4 ist ein Clipelement 6 angeformt, das in Bezug auf die laterale Erstreckung des zweiten Arms rückwertig gebogen ist und den Rahmen 2 untergreifende Arme 7 aufweist, wobei das Clipederelement 6 einen Berührungspunkt an dem hintergreifenden Arm 7 aufweist, der in Richtung des zweiten Arms 4 vorgespannt ist, um das Basisteil 1 am zweiten Arm 4 zu stabilisieren.

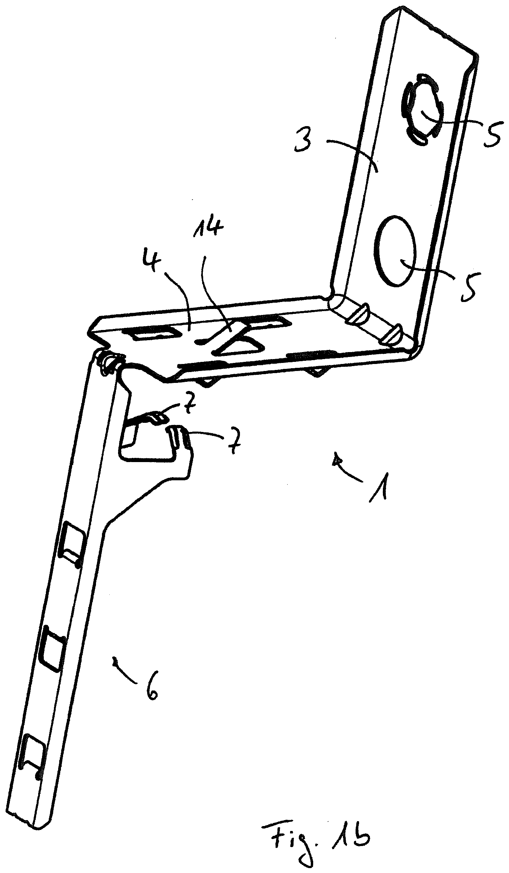

Die Figur 1b zeigt ein weiteres Basisteil 1, das in seiner Funktion dem in Figur 1a dargestellten Basisteil 1 entspricht, so dass für gleichwirkende Elemente des Basisteils 1 der Figur 1b auch die für das in Figur 1a dargestellte Basisteil 1 verwendet werden kann. Der Unterschied zwischen dem Basisteil 1 der Figuren 1a und 1b ist lediglich die konkrete Ausgestaltung der Arme 3, 4 und des Clipelements 6. Das in Figur 1b dargestellte Basisteil 1 ist schmaler ausgebildet und erstreckt sich mit dem Clipelement 6 weiter nach unten.

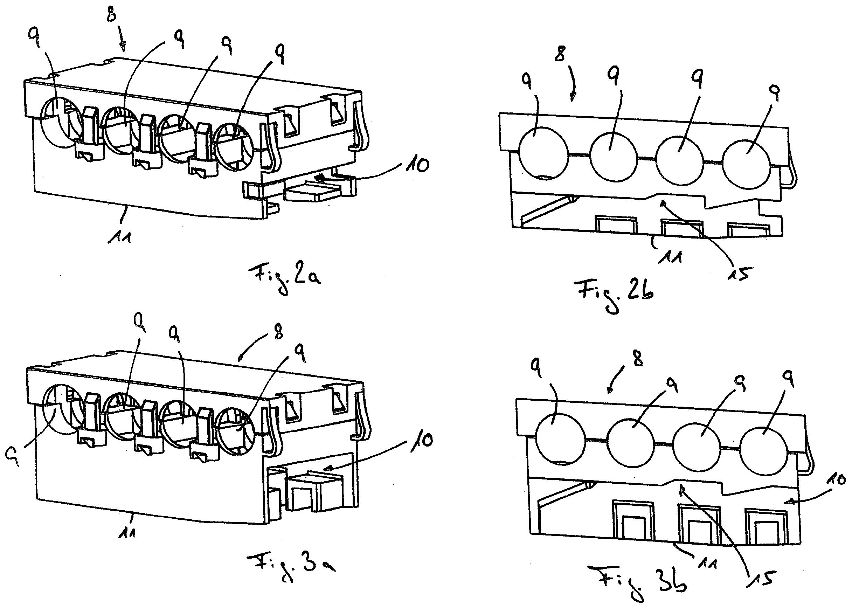

Am zweiten Arm 4 kann ein nachfolgend beschriebener Kabelstrangträger 8 (vgl. Fig. 2 bis 5) befestigt werden.

Die Figuren 2a, 2b, 3a, 3b, 4a, 4b, 5a und 5b zeigen Darstellungen von Kabelstrangträgern 8, die jeweils Öffnungen 9 zum Durchführen eines (nicht dargestellten) Kabelstrangs aufweisen.

Die Kabelstrangträger 8 gleichen sich in ihrer Funktion zur Aufnahme eines oder mehrerer Kabelstränge, die durch die Öffnungen 9 durchgeführt werden können. Jeder der Kabelstrangträger 8 weist ein Verbindungselement 10 auf, mittels dessen der Kabelstrangträger 8 mit dem Basisteil 1 verbunden werden kann. Der Kabelstrangträger 8 kann mit seinem Verbindungselement 10 auf den zweiten Arm 4 des Basisteils 1 aufgeschoben werden.

Die in den Figuren 2 bis 5 dargestellten Kabelstrangträger 8 unterscheiden sich in ihrer Anzahl und Anordnung der Öffnungen 9 für einen Kabelstrang und in dem Abstand, der zwischen einer Öffnung 9 und einem Auflageelement 11, das in Anlage zum Rahmen 2 beziehungsweise einem dem Rahmen 2 aufliegenden Rahmeneinlage 12 gelangen kann (vgl. Figuren 6a, 6b). Mittels des unterschiedlichen Abstands zwischen den Öffnungen 9 und das Auflageelement 11 kann das Befestigungssystem an unterschiedliche Bedingungen angepasst werden. Bei einem einfachen, vorliegenden Rahmen 2, wie er in Figur 6a gezeigt ist, kann ein größerer Abstand zwischen der Öffnung 9 und dem Auflageelement 11 verwendet werden, während bei der in Figur 6b dargestellten Einbausituation, bei der ein Rahmen 2 eine Rahmeneinlage 12 aufweist, der Abstand zwischen der Öffnung 9 und dem Auflageelement 11 geringer gewählt werden muss. In den Öffnungen 9 des in den Figuren 6 dargestellten Kabelstrangträgers 8 ist mit dem Kreuz die Mittellinie A eines Kabelstrangs angegeben.

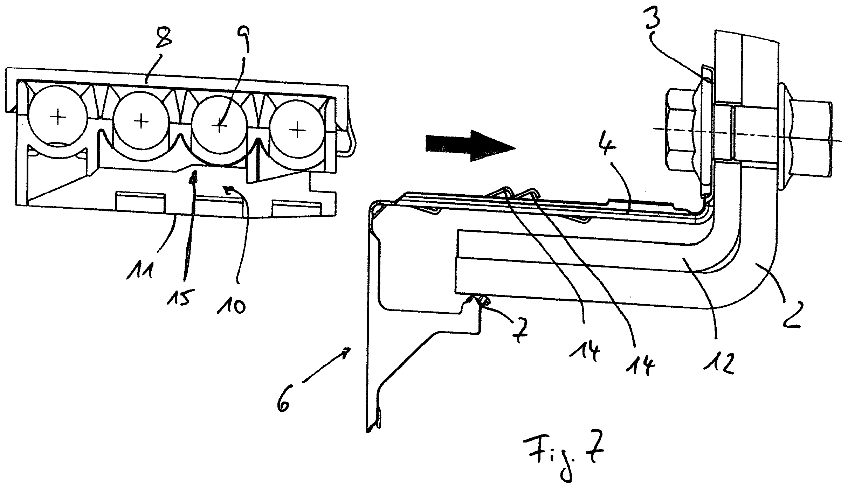

In Figur 7 ist gezeigt, wie die Montage beziehungsweise Befestigung eines Kabelstrangträgers 8 durchgeführt werden kann. Das Basisteil 1 ist im in Figur 7 dargestellten Ausführungsbeispiel mit einem Rahmen 2, der eine Rahmeneinlage 12 aufweist, fest mittels einer Schraubverbindung, die durch ein Befestigungselement 5 des Basisteils 1 gesteckt ist und durch den Rahmen geführt ist, verbunden. Das an dem zweiten Arm 4 vorgesehene Clipelement 6 ist unter den Rahmen 2 geclipst. Der Kabelstrangträger 8 kann zusammen mit in den Öffnungen 9 geführten Kabelsträngen auf den zweiten Arm 4 des Basisteils 1 aufgeschoben werden. Das Verbindungselement 10 des Kabelstrangträgers 8 wird entsprechend zum zweiten Arm 4 des Basisteils 1 ausgerichtet und der Kabelstrangträger 8 in Längserstreckung des zweiten Arms 4 geschoben. Der Kabelstrangträger 8 liegt dabei auf der Rahmenauflage 12 mit seinem Auflageelement 11 auf. Die Verbindung des Kabelstrangträgers 8 mit dem Basisteil 1 erfolgt mittels einer Schnappverbindung, wobei an den Kabelstrangträger 8 ein erster Teil einer Schnappverbindung ausgebildet ist und am Basisteil 1 ein zweiter Teil der Schnappverbindung ausgebildet ist. Der zweite Teil der Schnappverbindung, der am Basisteil 1 ausgestaltet ist, ist als federvorgespannte Kontaktzunge 14 ausgestaltet, die in eine als Verrastungsausnehmung 15 an den Kabelstrangträger 8 ausgestalteten zweiten Teil der Schnappverbindung bei erfolgter Montage eingreifen kann. In Figur 6b ist dieser montierte Zustand gezeigt.

Mittels der Schnappverbindung zwischen dem Kabelstrangträger 8 an dem Basisteil 1 kann eine vordefinierte Lage zwischen dem Kabelstrangträger 8 und dem Basisteil 1 in Richtung des Aufschiebens und damit in Längserstreckung des zweiten Arms 4 des Basisteils 1 erreicht werden. Eine Variabilität bei der Positionierung des Kabelstrangträgers 8 zum Basisteil 1 kann dadurch erreicht werden, dass die Erstreckung der Kontaktzunge 14 in Richtung der Längserstreckung des zweiten Arms 4 geringer ist als die Erstreckung der Verrastungsausnehmung 15 in dieser Richtung.

Zum Stabilisieren des montierten Kabelstrangträgers 8 am Basisteil 1 sind als federvorgespannte Presselemente ausgestaltete Federelemente 16 am zweiten Arm 4 vorgesehen, die den montierten Kabelstrangträger 8 in Richtung quer zur Längserstreckung des zweiten Arms 4 bewirken. Die Federelemente 16 drücken den Kabelstrangträger 8 in Richtung der Aufstandsfläche des Rahmens 2 beziehungsweise der Rahmeneinlage 12.

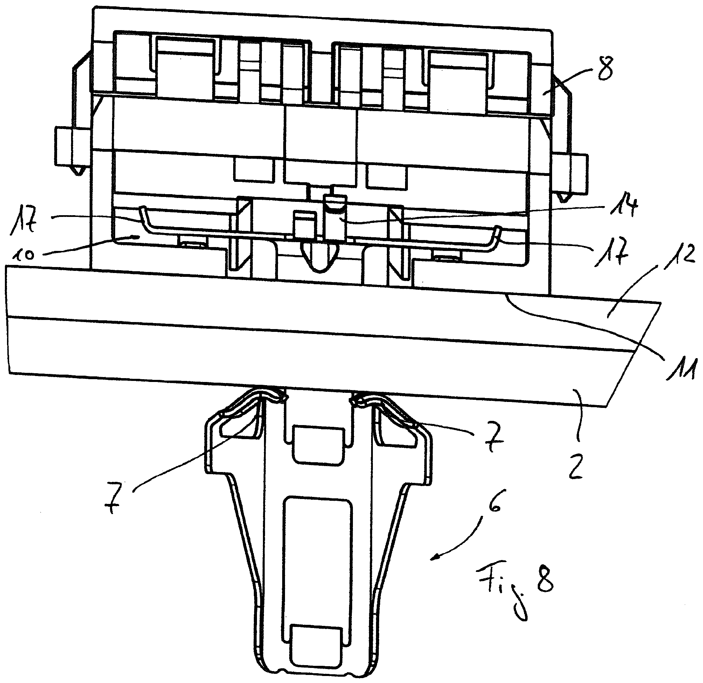

Die Figur 8 zeigt ein Ausführungsbeispiel, bei dem der zweite Arm 4 des Basisteils 1 zu beiden Seiten in Längserstreckung des zweiten Arms 4 Positionierungselemente 17 aufweist, die den Kabelstrangträger 8 zum Basisteil 1 beziehungsweise zweiten Arm 4 vorbestimmt ausrichten.

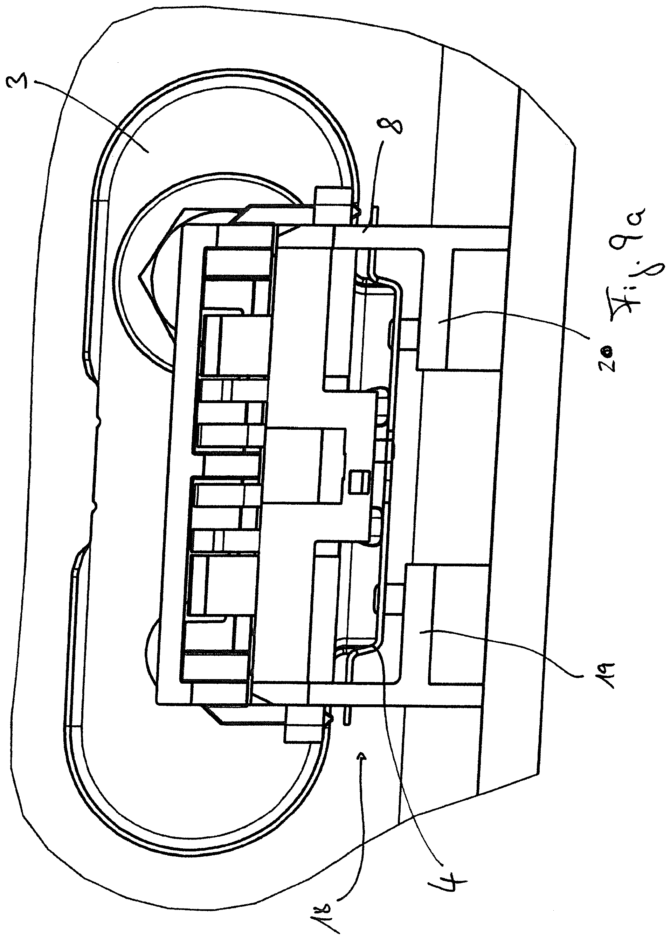

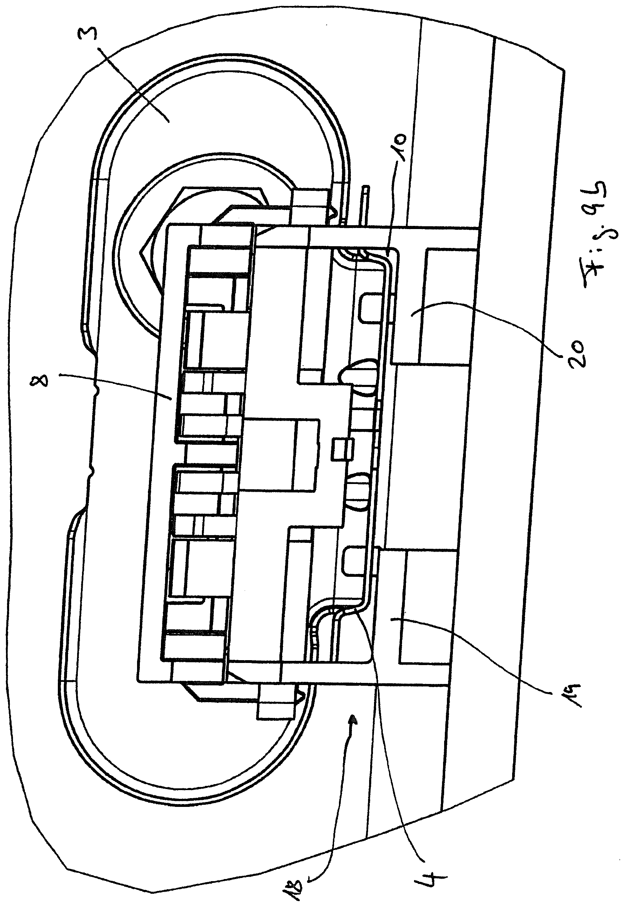

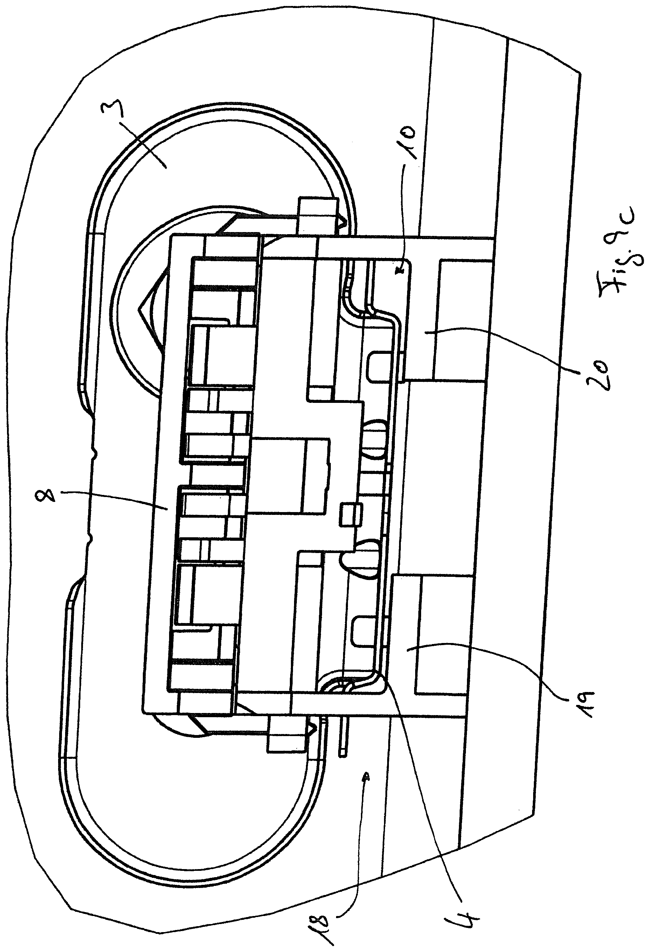

Die Figuren 9a bis 9c zeigen den auf das Basisteil 1 aufgeschobenen Kabelstrangträger 8 von vorne. Der Kabelstrangträger 8 weist einen schlittenartigen Teil 18 mit Klammern 19, 20 auf die den zweiten Arm 4 des Basisteils 1 an drei aufeinander folgenden (direkt aneinander angrenzenden) Seiten umgeben. Den Figuren 2 bis 5 ist zu entnehmen, dass die Dicke des schlittenartigen unteren Teils 18 der Kabelstrangträger 8 in der Richtung senkrecht zur Längserstreckung des schlittenartigen unteren Teils 18 variieren kann.

Die Klammern 19, 20 bilden eine Aufnahme für den zweiten Arm 4. Wobei der Abstand der beiden Klammern 19, 20 größer ist als die Breite des zweiten Arms, so dass der Kabelstrangträger 8 wie die Figuren 9a bis 9c zeigen in unterschiedlichen relativen Positionen zum Basisteil 1 bezogen auf die Erstreckung zwischen den beiden Klammern 19 und 20 mit dem Basisteil 1 verbunden werden kann.

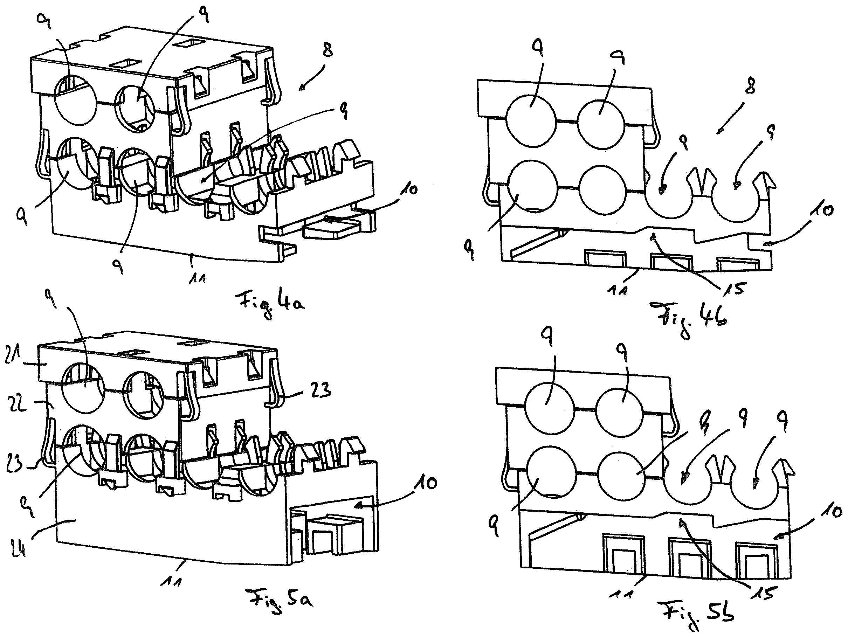

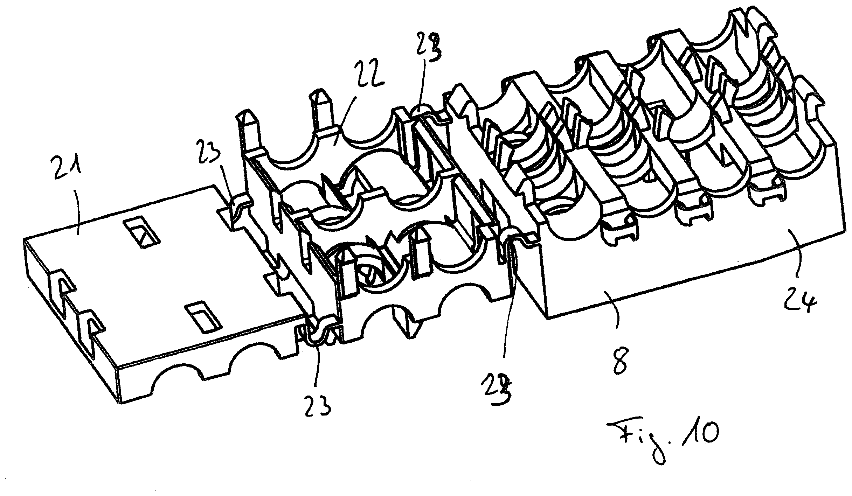

Fig. 10 zeigt einen Kabelstrangträger 8, der mehrere Teile aufweist, die mittels Gelenken miteinander verbunden sind und mittels Spritzguss einteilig hergestellt werden können, um den in Fig. 5 dargestellten Kabelstrangträger 8 zu bilden. Es ist ein bei der Montage oberes Teil 21 vorhanden, das mit einem mittleren Teil 22 mittels einer Gelenkverbindung 23 verbunden ist. Die Verbindung wird mittels seitlich angeformter Verrastungen erreicht. Die Öffnung 9, durch die der Kabelstrang geführt werden kann, sind teilweise durch Teile des oberen Teils 21 und teilweise durch Teile des mittleren Teils 22 des Kabelstrangträgers 8 begrenzt. Das mittlere Teil 22 des Kabelstrangträgers 8 ist über Gelenkverbindungen 23 mit einem unteren Teil 24 verbunden, wobei das mittlere Teil 22 und das untere Teil 24 bei der Montage miteinander mittels seitlich angeformter Verrastungen miteinander verrastet sind.

## Patentansprüche

1. Befestigungssystem zum Befestigen eines Kabelstrangs an einem Rahmen (2) eines Fahrzeugs, wobei das Befestigungssystem
- ein Basisteil (1), welches mit dem Rahmen (2) fest verbunden werden kann, und
- zumindest einen ersten Kabelstrangträger (8) und einen zweiten Kabelstrangträger (8), die wahlweise an dem Basisteil (1) befestigt werden können,
umfasst, wobei
der erste Kabelstrangträger (8) eine erste Öffnung (9) aufweist und der zweite Kabelstrangträger (8) eine zweite Öffnung (9) aufweist, und
der erste Kabelstrangträger (8) ein erstes Verbindungselement (10) zum Verbinden mit dem Basisteil (1) aufweist und der zweite Kabelstrangträger (8) ein zweites Verbindungselement mit dem Basisteil (1) aufweist, wobei
der erste Kabelstrangträger (8) ein erstes Auflageelement (11), mit dem der erste Kabelstrangträger (8) in Anlage mit dem Rahmen (2) oder einem rahmenseitigen Rahmeneinsatz gelangen kann, aufweist und der zweite Kabelstrangträger (8) ein zweites Auflageelement (11), mit dem der zweite Kabelstrangträger (8) in Anlage mit dem Rahmen (2) gelangen kann, aufweist, **dadurch gekennzeichnet, dass**
durch die erste Öffnung (9) des ersten Kabelstrangträgers (8) und die zweite Öffnung (9) des zweiten Kabelstrangträgers (8) jeweils der Kabelstrang geführt werden kann, und
der Abstand zwischen dem ersten Auflageelement (11) und der ersten Öffnung (9) des ersten Kabelstrangträgers (8) unterschiedlich ist zu dem Abstand zwischen dem zweiten Auflageelement (11) und der zweiten Öffnung (9) des zweiten Kabelstrangträgers (8).

2. Befestigungssystem zum Befestigen eines Kabelstrangs an einem Rahmen (2) eines Fahrzeugs, wobei das Befestigungssystem
- ein Basisteil (1), welches mit dem Rahmen (2) fest verbunden werden kann, und
- zumindest einen ersten Kabelstrangträger (8), der an dem Basisteil (1) befestigt werden kann, umfasst, wobei
das Basisteil (1) einen Arm (3, 4) aufweist, der von einer Aufnahme des Kabelstrangträgers (8) zumindest teilweise in Richtung quer zur Längserstreckung des Arms (3, 4) umschlossen werden kann, wobei der Kabelstrangträger (8) mit seiner Aufnahme auf den Arm (3, 4) des Basisteils (1) aufschieb- oder aufsteckbar ist und die Längserstreckung des Arms (3, 4) der Aufschub- oder Aufsteckrichtung auf den Arm (3, 4) entspricht, **dadurch gekennzeichnet, dass** die Aufnahme in Richtung quer zur Längserstreckung des Arms (3, 4) größer ist als die Erstreckung des Arms (3, 4) in Richtung quer zu seiner Längsrichtung, so dass eine Steck-Verbindung zwischen der Aufnahme des Kabelstrangträgers (8) und des Arms (3, 4) des Bauteils (1) ausbildbar ist, die in einer Richtung quer zur Aufschub- oder Aufsteckrichtung ein Verschieben des Kabelstrangträgers (8) relativ zum Arm (3, 4) des Basisteils (1) ermöglicht.

3. Befestigungssystem nach Anspruch 1 oder 2, **dadurch gekennzeichnet, dass** das Basisteil (1) einen ersten und einen zweiten Arm (3, 4) aufweist, wobei der zweite Arm (4) unter einem Winkel mit dem ersten Arm (3) verbunden ist.

4. Befestigungssystem nach Anspruch 3, **dadurch gekennzeichnet, dass** der erste Arm (3) ein Befestigungselement (5) zum Befestigen des Basisteils (1) an dem Rahmen (2) aufweist.

5. Befestigungssystem nach Anspruch 4, **dadurch gekennzeichnet, dass** das Befestigungselement (5) ein Langloch ist.

6. Befestigungssystem nach einem der Ansprüche 3 bis 5, **dadurch gekennzeichnet, dass** an dem Ende des zweiten Arms (4) ein Clipelement (6) vorgesehen ist, das in Bezug auf die laterale Erstreckung des zweiten Arms (4) rückwärtig gebogen ist, wobei das Clipelement (6) einen Berührungspunkt aufweist, der in Richtung des zweiten Arms (4) vorgespannt ist.

7. Befestigungssystem nach einem der Ansprüche 1 bis 6, sofern abhängig von Anspruch 1, **dadurch gekennzeichnet, dass** das Verbindungselement (10), das an jedem der beiden Kabelstrangträger (8) vorgesehen ist, ein erster Teil (15) einer Schnappverbindung ist, und ein zweiter Teil (14) der Schnappverbindung an dem Basisteil (1) vorgesehen ist.

8. Befestigungssystem nach Anspruch 7, **dadurch gekennzeichnet, dass** das Basisteil (1) wenigstens ein zweites Teil (14) der Schnappverbindung aufweist, das erlaubt, den gewählten Kabelstrangträger (8) an verschiedenen Positionen mit dem Basisteil (1) zu verbinden.

9. Befestigungssystem nach einem der Ansprüche 1 bis 8, sofern abhängig von Anspruch 1, **dadurch gekennzeichnet, dass** jeder Kabelstrangträger (8) einen schlittenartigen unteren Teil aufweist, wobei die Dicke des schlittenartigen unteren Teils in der Richtung senkrecht zur Längserstreckung des schlittenartigen unteren Teils des ersten Kabelstrangträgers (8) größer ist als die Dicke des schlittenartigen unteren Teils in der Richtung senkrecht zur Längserstreckung des schlittenartigen unteren Teils des zweiten Kabelstrangträgers (8).

10. Befestigungssystem nach einem der Ansprüche 1 bis 9, sofern abhängig von Anspruch 1, **dadurch gekennzeichnet, dass** wenigstens einer der beiden Kabelstrangträger (8) ein oberes Teil (21) aufweist, das mit den weiteren Teilen des Kabelstrangträgers (8) mittels einer Gelenkverbindung (23) verbunden ist und die Öffnung (9), durch die der Kabelstrang geführt werden kann, teilweise durch Teile des oberen Teils (21) und teilweise durch Teile eines weiteren Teils (22) des Kabelstrangträgers (8) begrenzt ist.

11. Rahmen eines Fahrzeugs mit einem daran befestigten Kabelstrang, **dadurch gekennzeichnet, dass** das Basisteil (1) des Befestigungssystems gemäß einem der Ansprüche 1 bis 10 an dem Rahmen (2) befestigt ist, einer der Kabelstrangträger (8) des Befestigungssystem gemäß einem der Ansprüche 1 bis 10 an dem Basisteil (1) befestigt ist und der Kabelstrang durch die Öffnung (9) des Kabelstrangträgers (8) geführt ist.

12. Rahmen nach Anspruch 11, **dadurch gekennzeichnet, dass** die Mittellinie (A) des Kabel-strangs im Bereich der Öffnung (9) gerade ist.

13. Verfahren zum Befestigen eines Kabelstrangs an einem Rahmen (2) eines Fahrzeugs, **dadurch gekennzeichnet, dass** ein Kabelstrangträger (8) eines Befestigungssystem gemäß einem der Ansprüche 1 bis 10 an einem Basisteil (1) eines Befestigungssystems gemäß einem der Ansprüche 1 bis 10 befestigt ist, das an dem Rahmen (2) befestigt ist.

## Claims

1. Fastening system for fastening a cable harness to a frame (2) of a vehicle, whereby the fastening system comprises
- a base part (1), which can be firmly connected to the frame (2), and
- at least one first cable harness support (8) and a second cable harness support (8), which can be fastened optionally to the base part (1), whereby
the first cable harness support (8) has a first opening (9) and the second cable harness support (8) has a second opening (9), and
the first cable harness support (8) has a first connection element (10) for connection to the base part (1) and the second cable harness support (8) has a second connection element to the base part (1), whereby
the first cable harness support (8) has a first support element (11), with which the first cable harness support (8) can come into contact with the frame (2) or a frame insert on the frame side, and the second cable harness support (8) has a second support element (11), with which the second cable harness support (8) can come into contact with the frame (2), **characterised in that** the cable harness can be guided respectively through the first opening (9) of the first cable harness support (8) and the second opening (9) of the second cable harness support (8), and
the distance between the first support element (11) and the first opening (9) of the first cable harness support (8) is different from the distance between the second support element (11) and the second opening (9) of the second cable harness support (8).

2. Fastening system for fastening a cable harness to a frame (2) of a vehicle, whereby the fastening system
- comprises a base part (1), which can be firmly connected to the frame (2), and
- at least one first cable harness support (8), which can be fastened to the base part (1), whereby
the base part (1) has an arm (3, 4), which can be enclosed at least partially by a receptacle of the cable harness support (8) in the direction transversal to the longitudinal extension of the arm (3, 4), whereby the cable harness support (8) with its receptacle can be pushed or fitted onto the arm (3, 4) of the base part (1) and the longitudinal extension of the arm (3, 4) corresponds to the direction of push or fit onto the arm (3, 4), **characterised in that** the receptacle in the direction transversal to the longitudinal extension of the arm (3, 4) is larger than the extension of the arm (3, 4) in the direction transversal to its longitudinal extension, such that a plug connection can be made between the receptacle of the cable harness support (8) and the arm (3, 4) of the part (1), which allows movement of the cable harness support (8) relative to the arm (3, 4) of the base part (1) in a direction transversal to the direction of push or fit.

3. Fastening system according to Claim 1 or 2, **characterised in that** the base part (1) has a first and a second arm (3, 4), whereby the second arm (4) is connected at an angle to the first arm (3).

4. Fastening system according to Claim 3, **characterised in that** the first arm (3) has a fastening element (5) for fastening the base part (1) to the frame (2).

5. Fastening system according to Claim 4, **characterised in that** the fastening element (5) is an elongated hole.

6. Fastening system according to one of Claims 3 to 5, **characterised in that** a clip element (6), which is bent back with respect to the lateral extension of the second arm (4), is provided at the end of the second arm (4), whereby the clip element (6) has a contact point, which is preloaded in the direction of the second arm (4).

7. Fastening system according to one of Claims 1 to 6, if dependent upon Claim 1, **characterised in that** the connection element (10), which is provided on each of the two cable harness supports (8), is a first part (15) of a snap connection, and a second part (14) of the snap connection is provided on the base part (1).

8. Fastening system according to Claim 7, **characterised in that** the base part (1) has at least one second part (14) of the snap connection, which allows the chosen cable harness support (8) to be connected to the base part (1) at different positions.

9. Fastening system according to one of Claims 1 to 8, if dependent upon Claim 1, **characterised in that** each cable harness support (8) has a slide-like lower part, whereby the thickness of the slide-like lower part in the direction perpendicular to the longitudinal extension of the slide-like lower part of the first cable harness support (8) is greater than the thickness of the slide-like lower part in the direction perpendicular to the longitudinal extension of the slide-like lower part of the second cable harness support (8).

10. Fastening system according to one of Claims 1 to 9, if dependent upon Claim 1, **characterised in that** at least one of the two cable harness supports (8) has an upper part (21), which is connected to the further parts of the cable harness support (8) by means of an articulated joint (23) and the opening (9), through which the cable harness can be guided, is partially restricted by parts of the upper part (21) and partially by parts of a further part (22) of the cable harness support (8).

11. Frame of a vehicle with a cable harness fastened to it, **characterised in that** the base part (1) of the fastening system according to one of Claims 1 to 10 is fastened to the frame (2), one of the cable harness supports (8) of the fastening system according to one of Claims 1 to 10 is fastened to the base part (1) and the cable harness is guided through the opening (9) of the cable harness support (8).

12. Frame according to Claim 11, **characterised in that** the centreline (A) of the cable harness is straight in the area of the opening (9).

13. Method for fastening a cable harness to a frame (2) of a vehicle, **characterised in that** a cable harness support (8) of a fastening system according to one of Claims 1 to 10 is fastened to a base part (1) of a fastening system according to one of Claims 1 to 10, the base part being fastened to the frame (2).

## Revendications

1. Système de fixation pour fixer un faisceau de câbles à un châssis (2) d'un véhicule, dans lequel le système de fixation comprend
- une partie de base (1) qui peut être raccordée solidement au châssis (2), et
- au moins un premier support de faisceau de câbles (8) et un deuxième support de faisceau de câbles (8), qui peuvent être éventuellement fixés à la partie de base (1),
dans lequel
le premier support de faisceau de câbles (8) présente une première ouverture (9) et le deuxième support de faisceau de câbles (8) présente une deuxième ouverture (9), et
le premier support de faisceau de câbles (8) présente un premier élément de liaison (10) pour le raccordement à la partie de base (1) et le deuxième support de faisceau de câbles (8) présente un deuxième élément de liaison à la partie de base (1), dans lequel
le premier support de faisceau de câbles (8) présente un premier élément de support (11), avec lequel le premier support de faisceau de câbles (8) peut entrer en contact avec le châssis (2) ou un insert de châssis côté châssis, et le deuxième support de faisceau de câbles (8) présente un deuxième élément de support (11), avec lequel le deuxième support de faisceau de câbles (8) peut entrer en contact avec le châssis (2), **caractérisé en ce que**
le faisceau de câbles peut être respectivement guidé à travers la première ouverture (9) du premier support de faisceau de câbles (8) et la deuxième ouverture (9) du deuxième support de faisceau de câbles (8), et
l'espacement entre le premier élément de support (11) et la première ouverture (9) du premier support de faisceau de câbles (8) est différent de l'espacement entre le deuxième élément de support (11) et la deuxième ouverture (9) du deuxième support de faisceau de câbles (8).

2. Système de fixation pour fixer un faisceau de câbles à un châssis (2) d'un véhicule, dans lequel le système de fixation comprend
- une partie de base (1) qui peut être raccordée solidement au châssis (2), et
- au moins un premier support de faisceau de câbles (8) qui peut être fixé à la partie de base (1), dans lequel
la partie de base (1) présente un bras (3, 4) qui peut être entouré par un réceptacle du support de faisceau de câbles (8) au moins partiellement dans la direction transversale à l'extension longitudinale du bras (3, 4), dans lequel le support de faisceau de câbles (8) avec son réceptacle peut être poussé ou enfiché sur le bras (3, 4) de la partie de base (1) et l'extension longitudinale du bras (3, 4) correspond à la direction de poussée ou d'enfichage sur le bras (3, 4), **caractérisé en ce que** le réceptacle dans la direction transversale à l'extension longitudinale du bras (3, 4) est plus grand que l'extension du bras (3, 4) dans la direction transversale à sa direction longitudinale, de sorte qu'un raccord enfichable entre le réceptacle du support de faisceau de câbles (8) et le bras (3, 4) du composant (1) puisse être réalisé, qui permet le déplacement du support de faisceau de câbles (8) par rapport au bras (3, 4) de la partie de base (1) dans une direction transversale à la direction de poussée ou d'enfichage.

3. Système de fixation selon la revendication 1 ou 2, **caractérisé en ce que** la partie de base (1) présente un premier et un deuxième bras (3, 4), dans lequel le deuxième bras (4) est raccordé au premier bras (3) en formant un angle.

4. Système de fixation selon la revendication 3, **caractérisé en ce que** le premier bras (3) présente un élément de fixation (5) pour fixer la partie de base (1) au châssis (2).

5. Système de fixation selon la revendication 4, **caractérisé en ce que** l'élément de fixation (5) est un alésage oblong.

6. Système de fixation selon une des revendications 3 à 5, **caractérisé en ce qu'**un élément d'attache (6) est prévu à l'extrémité du deuxième bras (4), qui est recourbé vers l'arrière par rapport à l'extension latérale du deuxième bras (4), dans lequel l'élément d'attache (6) présente un point de contact qui est précontraint dans la direction du deuxième bras (4).

7. Système de fixation selon une des revendications 1 à 6, si dépendante de la revendication 1, **caractérisé en ce que** l'élément de liaison (10), qui est prévu sur chacun des deux supports de faisceaux de câbles (8) est une première partie (15) d'une liaison par encliquetage, et une deuxième partie (14) de la liaison par encliquetage est prévue sur la partie de base (1).

8. Système de fixation selon la revendication 7, **caractérisé en ce que** la partie de base (1) présente au moins une deuxième partie (14) de la liaison par encliquetage qui permet de raccorder le support de faisceau de câbles sélectionné (8) à la partie de base (1) à différentes positions.

9. Système de fixation selon une des revendications 1 à 8, si dépendante de la revendication 1, **caractérisé en ce que** chaque support de faisceau de câbles (8) présente une partie inférieure en forme de glissière, dans lequel l'épaisseur de la partie inférieure en forme de glissière dans la direction perpendiculaire à l'extension longitudinale de la partie inférieure en forme de glissière du premier support de faisceau de câbles (8) est supérieure à l'épaisseur de la partie inférieure en forme de glissière dans la direction perpendiculaire à l'extension longitudinale de la partie inférieure en forme de glissière du deuxième support de faisceau de câbles (8).

10. Système de fixation selon une des revendications 1 à 9, si dépendante de la revendication 1, **caractérisé en ce qu'**au moins un des deux supports de faisceaux de câbles (8) présente une partie supérieure (21) qui est raccordée aux autres parties du support de faisceau de câbles (8) au moyen d'une liaison articulée (23) et l'ouverture (9), à travers laquelle le faisceau de câbles peut être guidé, est limitée partiellement par des parties de la partie supérieure (21) et partiellement par des parties d'une autre partie (22) du support de faisceau de câbles (8).

11. Châssis d'un véhicule auquel est fixé un faisceau de câbles, **caractérisé en ce que** la partie de base (1) du système de fixation selon une des revendications 1 à 10 est fixée au châssis (2), un des supports de faisceaux de câbles (8) du système de fixation selon une des revendications 1 à 10 est fixé à la partie de base (1) et le faisceau de câbles est guidé à travers l'ouverture (9) du support de faisceau de câbles (8).

12. Châssis selon la revendication 11, **caractérisé en ce que** l'axe médian (A) du faisceau de câble est rectiligne au niveau de l'ouverture (9).

13. Procédé de fixation d'un faisceau de câbles sur un châssis (2) d'un véhicule, **caractérisé en ce qu'**un support de faisceau de câbles (8) d'un système de fixation selon une des revendications 1 à 10 est fixé sur une partie de base (1) d'un système de fixation selon une des revendications 1 à 10, qui est fixée au châssis (2).
